# EUROPÄISCHE PATENTSCHRIFT

(11) **EP 3 510 731 B1**
(45) Veröffentlichungstag und Bekanntmachung des Hinweises auf die Patenterteilung: **11.11.2020**
(21) Anmeldenummer: 17764529.8
(22) Anmeldetag: 28.08.2017
(51) Int. Cl.: H04L 12/26

(54) **PRÜFVORRICHTUNG UND VERFAHREN ZUM ÜBERPRÜFEN EINES VERHALTENS EINES NETZWERKVERBUNDES AUS STEUERGERÄTEN EINES KRAFTFAHRZEUGS BEI FEHLERHAFTEM UND/ODER MANIPULIERTEM NETZWERK-DATENVERKEHR**
TESTING APPARATUS AND METHOD FOR CHECKING A BEHAVIOUR OF A NETWORK COMPLEX COMPRISING CONTROLLERS OF A MOTOR VEHICLE IN THE EVENT OF ERRONEOUS AND/OR MANIPULATED NETWORK DATA TRAFFIC
DISPOSITIF DE CONTRÔLE ET PROCÉDÉ DE CONTRÔLE D'UN COMPORTEMENT D'UN GROUPE DE RÉSEAUX CONSTITUÉ D'APPAREILS DE COMMANDE D'UN VÉHICULE À MOTEUR EN CAS DE TRAFIC DE DONNÉES DU RÉSEAU ERRONÉ/OU MANIPULÉ

(30) Priorität: 06.09.2016 DE 102016216898
(43) Veröffentlichungstag der Anmeldung: 17.07.2019
(73) Patentinhaber: Continental Automotive GmbH, 30165 Hannover (DE)
(72) Erfinder: NEUBAUER, Philipp, 88255 Baienfurt (DE); SEIFERT, Stefan, 92729 Weiherhammer (DE)
(86) Internationale Anmeldenummer: PCT/EP2017/071500
(87) Internationale Veröffentlichungsnummer: WO 2018/046325

(56) Entgegenhaltungen:
- DE-A1-102012 208 205
- DE-A1-102012 224 024
- DE-A1-102014 214 300
- US-A1- 2016 182 341

## Beschreibung

Die Erfindung betrifft eine Prüfungsvorrichtung und ein Verfahren zum Überprüfen eines Verhaltens eines Netzwerkverbundes aus Steuergeräten eines Kraftfahrzeugs in dem Fall, dass der Netzwerk-Datenverkehr fehlerhaft und/oder manipuliert ist.

Diese Problemstellung ergibt sich durch eine immer weitere Vernetzung heutiger Kraftfahrzeuge. Der Netzwerk-Datenverkehr kann hierbei über ein Datennetzwerk übertragen werden. Da Kraftfahrzeuge heutzutage zudem auch Daten mit der Umgebung austauschen, zum Beispiel über die Car2X-Technologie, Mobilfunk (UMTS, GPRS, LTE) und/oder Funkverbindungen auf der Basis von Bluetooth oder WLAN (Wireless Local Area Network), ergibt sich für Angreifer die Möglichkeit, Daten in das Datennetzwerk des Kraftfahrzeugs einzuschleusen und hierüber Steuergeräte zu erreichen und zum Beispiel vorhandene Fehler (Vulnerabilities) in Steuergeräten zu finden und/oder für eine Manipulation des Betriebs des Kraftfahrzeugs auszunutzen.

Daher ist es nötig, einen vorgegebenen Netzwerkverbund aus Steuergeräten daraufhin zuverlässig überprüfen zu können, ob durch Nachrichten, die in dem Datennetzwerk übertragen werden, eine unvorhergesehene und/oder unerwünschte Reaktion eines Steuergeräts und/oder des Datennetzwerks hervorgerufen werden kann.

DE 10 2014 214300 A1 D1 offenbart ein Verfahren, um die Funktionalität eines Netzwerks in einem Fahrzeug zu testen. Eine Prüfvorrichtung generiert ein zeitliches Kommunikationsmodell für die Kommunikation der Steuereinrichtungen des Netzwerks und ein räumliches Netzwerkmodell für die Netzwerktopologie des Netzwerks. Diese zwei Modelle werden verbunden und gemeinsam verwendet, um Testverkehr im Netzwerk zu generieren. Der Testverkehr wird dann ausgewertet, um Übertragungsfehler zu erkennen, indem die Übertragungszeiten der Testpakete analysiert werden.

Der Erfindung liegt die Aufgabe zugrunde, einen Netzwerkverbund aus Steuergeräten eines Kraftfahrzeugs auf seine Robustheit gegen fehlerhafte und/oder manipulierte Nachrichten zu überprüfen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Überprüfen eines Verhaltens eines Netzwerkverbundes aus Steuergeräten eines Kraftfahrzeugs bei fehlerhaftem und/oder manipuliertem Netzwerk-Datenverkehr bereitgestellt. Der Netzwerk-Datenverkehr setzt sich aus Nachrichten zusammen, die über ein Datennetzwerk des Kraftfahrzeugs an die Steuergeräte übertragen werden können. Das Datennetzwerk kann z.B. eine oder auch mehrere aus den folgenden Netzwerktechnologien umfassen: Ethernet und/oder CAN (Controller Area Network) und/oder LIN (Local Interconnect Network) und/oder MOST (Media Oriented Systems Transport).

Das planmäßige oder bestimmungsgemäße Verhalten der Steuergeräte ist bereits bei der Entwicklung des Kraftfahrzeugs bekannt, so dass gemäß dem Verfahren das für den Betrieb des Kraftfahrzeugs bestimmungsgemäße Sendeverhalten und/oder Empfangsverhalten einiger oder aller der beteiligten Steuergeräte ermittelt werden kann. Entsprechend wird jeweils ein Kommunikationsmodell des Steuergeräts entsprechend festgelegt. Jedes Kommunikationsmodell beschreibt also das Sendeverhalten und/oder Empfangsverhalten des Steuergeräts in Bezug auf das Datennetzwerk. Zusätzlich legt ein Netzwerkmodell die Netzwerktopologie des Datennetzwerks des Kraftfahrzeugs fest, d.h. die möglichen Kommunikationspfade oder Übertragungspfade, die sich bei dem Kraftfahrzeug in dem Datennetzwerk zwischen den Steuergeräten ergeben. Das Netzwerkmodell kann zum Beispiel einen Switch, zum Beispiel einen Ethernet-Switch, beschreiben, durch welchen einzelne Netzwerkzweige des Datennetzwerks miteinander verbunden sind, wobei eine Übertragung von Nachrichten des Netzwerk-Datenverkehrs zwischen den Netzwerkzweigen durch den Switch begrenzt oder gesteuert ist. Das Netzwerkmodell beschreibt also, welches Steuergerät welches andere Steuergerät überhaupt nur mit Nachrichten beaufschlagen oder versorgen oder ansprechen kann, weil ein entsprechender Übertragungspfad vorhanden ist.

Der beschriebene Netzwerkverbund wird nachgebildet, indem die Kommunikationsmodelle an das Netzwerkmodell angeschlossen werden. Nun können die Kommunikationsmodelle betrieben werden, was durch eine Modellprüfeinrichtung durchgeführt wird. Die Modellprüfeinrichtung kann zum Beispiel als ein Programmodul einer Prozessoreinrichtung der Prüfvorrichtung betrieben oder realisiert sein. Indem die Kommunikationsmodelle betrieben werden, generieren sie den Netzwerk-Datenverkehr gemäß dem jeweiligen Sendeverhalten des jeweiligen Steuergeräts, so wie es durch das jeweilige Kommunikationsmodell beschrieben oder nachgebildet ist. Da die Kommunikationsmodelle über das Netzwerkmodell miteinander verbunden sind, überträgt das Netzwerkmodell den Netzwerk-Datenverkehr gemäß der Netzwerktopologie zwischen den Kommunikationsmodellen. Erreicht eine Nachricht ein Kommunikationsmodell, so werden die Nachrichten gemäß dem Empfangsverhalten der Steuergeräte von dem Kommunikationsmodell empfangen.

Um nun bei diesem Netzwerkverbund zu überprüfen, wie sich fehlerhafter und/oder manipulierter Netzwerk-Datenverkehr auswirkt, ist erfindungsgemäß vorgesehen, zumindest ein Störquellenmodell an das Netzwerkmodell anzuschließen. Bei dem Störquellenmodell ist ein vorbestimmtes, dem besagten bestimmungsgemäßen Betrieb des Kraftfahrzeugs widersprechendes Sendeverhalten vorgesehen. Das Störquellenmodell sorgt also in den Netzwerkverbund für zusätzlichen Netzwerk-Datenverkehr, wie er im Betrieb des Kraftfahrzeugs bestimmungsgemäß oder bei fehlerfreier Funktion nicht vorkommen sollte oder ausbleiben sollte. Das Störquellenmodell beschreibt also eine mögliche Störquelle. Das Störquellenmodell wird wie die Kommunikationsmodelle durch die Modellprüfeinrichtung betrieben, sodass das Störquellenmodell den zusätzlichen, dem bestimmungsgemäßen Betrieb widersprechenden Netzwerk-Datenverkehr erzeugt. Nun kann durch die Modellprüfeinrichtung erkannt werden, ob zumindest eines der Kommunikationsmodelle und/oder das Netzwerkmodell einen vorbestimmten Fehlerzustand einnimmt. Mit anderen Worten kann durch die Modellprüfeinrichtung die Kommunikation zwischen den Steuergeräten und zumindest einer Störquelle nachgebildet oder erzeugt und analysiert werden. Was ein Fehlerzustand ist, kann je nach Bedarf der Prüfung vom Fachmann festgelegt werden. Ein Beispiel für einen Fehlerzustand kann sein, dass eine Senderate von Nachrichten eines Steuergeräts größer als ein vorbestimmter Höchstwert wird. Ein anderer Fehlerzustand kann sein, dass in dem Datennetzwerk zum Beispiel ein Netzwerkzweig durch den Netzwerk-Datenverkehr überlastet wird, also nicht alle Nachrichten übertragen werden können. Dazu kann es kommen, falls der besagte Switch Nachrichten verwirft oder löscht, weil zum Beispiel ein Puffer oder Zwischenspeichert des Switches bereits voll ist.

Durch die Erfindung ergibt sich der Vorteil, dass auf Basis der über das Netzwerkmodell verbundenen Kommunikationsmodelle der Netzwerk-Datenverkehr des Kraftfahrzeugs nachgestellt oder nachgebildet werden kann und dieser dann durch gezieltes Einspeisen von zusätzlichem Netzwerk-Datenverkehr mittels des zumindest einen Störquellenmodells auf unterschiedliche Weise gestört oder beeinträchtigt werden kann. Durch die Reaktion der Kommunikationsmodelle kann dann abgeschätzt werden, welche Reaktion sich entsprechend im Zusammenspiel aller Steuergeräte im Netzwerkverbund ergibt. Hierdurch kann ein Fehlerzustand erkannt oder vorhergesagt werden, der sich nicht durch einen Programmierfehler in einem einzelnen Steuergerät ergeben muss, sondern selbst bei ausschließlich korrekt oder bestimmungsgemäß arbeitenden Steuergeräten allein aus der Kombination des Sendeverhaltens und/oder Empfangsverhalten aller Steuergeräte ergeben kann.

Zu der Erfindung gehört auch die Prüfvorrichtung zum Durchführen des erfindungsgemäßen Verfahrens. Hierzu weist die Prüfvorrichtung eine Prozessoreinrichtung auf, die dazu eingerichtet ist, eine Ausführungsform des erfindungsgemäßen Verfahrens durchzuführen. Mittels der Prüfvorrichtung kann so in vorteilhafter Weise ein Fehlerzustand detektiert werden, der sich durch fehlerhaften und/oder manipulierten Netzwerk-Datenverkehr in einem Netzwerkverbund aus Steuergeräten eines Kraftfahrzeugs ergeben oder herbeigeführt werden kann. Die Prozessoreinrichtung kann zum Durchführen des Verfahrens beispielsweise zumindest einen Mikrocontroller und/oder einen Mikroprozessor aufweisen. Des Weiteren kann ein Programmcode bereitgestellt sein, welcher dazu eingerichtet ist, bei Ausführen durch die Prozessoreinrichtung die Ausführungsform erfindungsgemäßen Verfahrens durchzuführen.

Zu der Erfindung gehören auch vorteilhafte Weiterbildungen, durch deren Merkmale sich zusätzliche Vorteile ergeben.

In Bezug auf das zumindest eine Störquellenmodell kann vorgesehen sein, dass mindestens ein Störquellenmodell eines der Steuergeräte beschreibt, wie es sich verhalten würde, wenn es in seinem Sendeverhalten manipuliert und/oder defekt ist. Es muss also keine äußere Attacke auf den Netzwerkverbund vorliegen, sondern es kann auch ein Fehlerzustand erkannt werden, der sich aus dem Netzwerkverbund selbst heraus aufgrund eines manipulierten oder defekten Steuergeräts ergeben kann. Zusätzlich oder alternativ dazu kann mindestens ein Störquellenmodell eine zusätzliche Datenquelle nachbilden, die zusätzlichen Netzwerk-Datenverkehr in das Datennetzwerk einspeist. Beispielsweise kann als Störquellenmodell eine Kommunikationseinrichtung vorgesehen sein, die über eine Funkverbindung Daten einer fahrzeugexternen Datenquelle empfängt und diese empfangenen Daten in das Datennetzwerk einspeist. So kann zum Beispiel eine Manipulationsattacke auf das Kraftfahrzeug nachgebildet werden.

So ist insbesondere vorgesehen, dass durch ein Störquellenmodell als Sendeverhalten eine Vervielfachung, zum Beispiel eine Verdopplung, von zwischen zumindest zwei Steuergeräten ausgetauschten Nachrichten durchgeführt wird. Eine solche Duplikationsattacke weist die Besonderheit auf, dass die duplizierte Nachricht in dem Netzwerkverbund stets als gültige Nachricht erkannt wird, weil sie alle Merkmale der ebenfalls gültigen originalen Nachricht aufweist. Somit kann eine duplizierte Nachricht nicht durch ein Filter anhand ihres Datenmusters als Manipulation erkannt werden. Durch die Ausführungsform des Verfahrens ist es nun möglich, bei Vorhandensein vervielfachter Nachrichten die Reaktion des Netzwerkverbundes zu erkennen.

Ein Störquellenmodell kann als Sendeverhalten vorsehen, dass Nachrichten mit einer Senderate ausgesendet werden, die größer als ein einstellbarer Schwellenwert ist. Dies kann beispielsweise ein Steuergerät nachbilden, das Nachrichten mit dieser Senderate erzeugt. Eine Bezeichnung für ein solches Steuergerät ist quatschender Idiot (Babbling Idiot). Ein typischer Fehler, der ein solches Sendeverhalten eines Steuergeräts bewirken kann, ist zum Beispiel ein defekter Sensor eines Steuergeräts oder ein Wackelkontakt oder eine schwankende Versorgungsspannung.

Eine Weiterbildung des Verfahrens sieht vor, dass das Netzwerkmodell zumindest eine Anschlussschnittstelle nachbildet, welche zum Anschließen eines Zusatzgeräts an dem Datennetzwerk ausgestaltet ist. So kann das Netzwerkmodell zum Beispiel eine OBD-Schnittstelle (OBD - Onboard Diagnosis) nachbilden. So kann an diese Anschlussschnittstelle ein Störquellenmodell angeschlossen werden und hierdurch nachgebildet werden, wie der Netzwerkverbund bei Anschließen eines Zusatzgeräts an das Datennetzwerk reagiert. Über die Anschlussschnittstelle können z.B. auch Daten in das Datennetzwerk eingespeist werden, wie sie in dem Kraftfahrzeug über eine Kommunikationseinrichtung, z.B. ein Mobilfunkmodul und/oder ein WLAN-Modul, aus einer fahrzeugexternen Datenquellen empfangen werden können.

Bevorzugt ist vorgesehen, dass die Kommunikationsmodelle der Steuergeräte und/oder das zumindest eine Störquellenmodell jeweils als Zustandsautomat ausgestaltet ist. Hierdurch ergibt sich der Vorteil, dass die Modelle nicht die inneren Betriebsvorgänge in dem Steuergerät bzw. in der Störquelle nachbilden müssen, sondern durch den Zustandsautomaten ausschließlich das Verhalten des Steuergeräts bzw. der Störquelle in Bezug auf das Datennetzwerk nachgebildet werden muss. Dies ermöglicht eine besonders effiziente Überprüfung auf Fehlerzustände.

Mittels des Zustandsautomaten wird dann bevorzugt als Sendeverhalten eine zyklische Erzeugung von Netzwerk-Datenverkehr gesteuert. Hierdurch ergibt sich der Vorteil, dass auch zeitlich komplexe oder dynamische Vorgänge, zum Beispiel das aufschaukeln einer Datenmenge im Datennetzwerk, nachempfunden oder nachgebildet oder erkannt werden kann.

Um mittels der Modellprüfeinrichtung die Kommunikationsmodelle und das zumindest eine Störquellenmodell zu betreiben, ist bevorzugt vorgesehen, dass die Modellprüfeinrichtung hierzu einen sogenannten Model-Checker (Modellprüfer, englisch: model checker) betreibt. Beispielsweise kann eine sogenannte LTL-Überprüfung (LTL-linear temporal logic) vorgesehen sein. Ein möglicher Model-Checker ist das Produkt UPPAAL ®, wie es zum Beispiel auf der Internetseite www.uppaal.org beschrieben ist.

Um das bestimmungsgemäße Sendeverhalten und/oder Empfangsverhalten eines Steuergeräts zu ermitteln, ist erfindungsgemäß vorgesehen, dass hierzu das sogenannte Kommunikationsprotokoll des Kraftfahrzeugs zugrunde gelegt wird, welches für alle Steuergeräte ihr Kommunikationsverhalten bezüglich des Datennetzwerks im Betrieb des Kraftfahrzeugs vorgibt.

Als Fehlerzustand, der dann beim Betrieb der Kommunikationsmodelle und des zumindest einen Störquellenmodell erkannt werden kann, kann zum Beispiel vorgesehen sein, dass der Fehlerzustand umfasst, dass der Netzwerk-Datenverkehr dem Kommunikationsprotokoll widerspricht. Dann verhält sich das Kraftfahrzeug nicht spezifikationsgemäß.

Andersherum kann das Kommunikationsprotokoll auch genutzt werden, um die Kommunikationsmodelle der Steuergeräte automatisiert zu erzeugen. Hierzu ist eine Wandlervorrichtung vorgesehen, die aus dem Kommunikationsprotokoll die Kommunikationsmodelle der Steuergeräte auf der Grundlage einer vorbestimmten Transformationsvorschrift erzeugt. Die Wandlereinrichtung kann als Programmmodul der beschriebenen Prozessoreinrichtung ausgestaltet sein. Die Tranformationsvorschrift kann zum Beispiel vorsehen, dass Nachrichten-Sendezeitpunkte, die in dem Kommunikationsprotokoll für bestimmte Nachrichten angegeben sind, in ein Kommunikationsmodell übertragen werden, damit dieses ein Steuergerät beschreibt, das diese Nachrichten zu den jeweiligen Sendezeitpunkten erzeugt.

Im Folgenden ist ein Ausführungsbeispiel der Erfindung beschrieben. Hierzu zeigt:
Fig. 1 eine schematische Darstellung einer Ausführungsform der erfindungsgemäßen Prüfvorrichtung, die eine Ausführungsform des erfindungsgemäßen Verfahrens durchführt;
Fig. 2 eine schematische Darstellung eines Kommunikationsmodells der Prüfvorrichtung von Fig. 1; und
Fig. 3 eine schematische Darstellung eines Netzwerkmodells der Prüfvorrichtung von Fig. 1.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

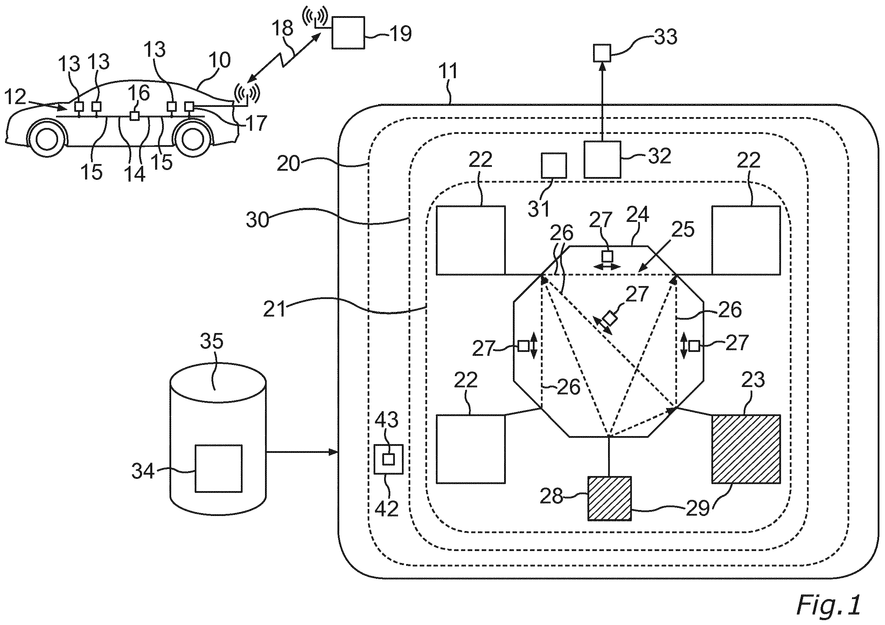

Fig. 1 zeigt ein Kraftfahrzeug 10 und eine Prüfvorrichtung 11 für das Kraftfahrzeug 10. Das Kraftfahrzeug 10 kann zum Beispiel ein Kraftwagen, insbesondere einen Personenkraftwagen oder Lastkraftwagen, oder eine Flugzeug oder ein Schiff sein. Das Kraftfahrzeug 10 kann einen Netzwerkverbund 12 aufweisen, der Steuergeräte 13 des Kraftfahrzeugs 10 umfassen kann. In dem Netzwerkverbund 12 können die Steuergeräte 13 über ein Datennetzwerk 14 verbunden oder gekoppelt sein, über welches die Steuergeräte 13 Nachrichten austauschen können. Die Gesamtheit der Nachrichten wird hier als Netzwerk-Datenverkehr bezeichnet, wobei der Netzwerk-Datenverkehr noch zusätzliche Daten einer Störquelle umfassen kann. Das Datennetzwerk 14 kann eine oder mehrere Netzwerktechnologien umfassen, z.B. FlexRay, CAN, MOST, Ethernet. Netzwerkzweige 15 des Datennetzwerks 14 können über ein Switch 16 gekoppelt sein.

An das Datennetzwerk 14 kann eine Kommunikationseinrichtung 17 angeschlossen sein, die über eine Funkverbindung 18 Daten aus einer fahrzeugexternen Quelle 19, zum Beispiel dem Internet und/oder einem Mobilfunknetzwerk, empfangen kann. Falls es sich bei diesen empfangenen Daten um fehlerhafte oder manipulierte Daten handelt, kann über die Kommunikationseinrichtung 14 unter Umständen der Betrieb des Netzwerkverbundes 12 beeinträchtigt werden.

Um z.B. dies zu prüfen, kann mittels der Prüfvorrichtung 11 das Verhalten des Netzwerkverbundes 12 bei einem vorgegebenen Netzwerk-Datenverkehr überprüft werden. Die Prüfvorrichtung 11 kann hierzu zum Beispiel auf der Grundlage eines Computers oder eines Computerverbundes realisiert sein, durch welchen eine Prozessoreinrichtung 20 bereitgestellt ist. Mittels der Prüfvorrichtung 11 kann der Netzwerkverbund 12 geprüft werden, indem eine Nachbildung 21 des Netzwerkverbundes 12 betrieben wird. Die Steuergeräte 13 können hierbei durch ein Kommunikationsmodell 22, 23 beschrieben oder nachgebildet sein. Ein Netzwerkmodell 24 kann eine Netzwerktopologie 25 des Datennetzwerks 14 umsetzen, wodurch die in dem Datennetzwerk 14 ermöglichten oder bereitgestellten Übertragungspfade 26 des Netzwerk-Datenverkehrs 27 festgelegt sind. Die Kommunikationsmodelle 22, 23 sind an das Netzwerkmodell 24 angeschlossen.

Um nun eine Manipulation oder Störung oder Fehlfunktion in dem Netzwerk-Datenverkehr 27 nachzubilden, kann vorgesehen sein, dass eines der Kommunikationsmodelle, hier das Kommunikationsmodell 23, einen außer-bestimmungsgemäßen Betrieb eines der Steuergeräte 13 festgelegt. Zusätzlich oder alternativ dazu kann ein Angreifermodell 28 an das Netzwerkmodell 24 angeschlossen sein. Das Angreifermodell 28 kann zum Beispiel die über die Funkverbindung 18 übertragenen Daten der fahrzeugexternen Datenquelle 19 erzeugen, also die Kommunikationseinrichtung 17 nachbilden. Das defekte Steuergerät, welches durch das Kommunikationsmodell 23 beschrieben wird, und das Angreifermodell 28 stellen jeweils somit ein Störquellenmodell 29 in dem nachgebildet Netzwerkverbund 21 dar.

Eine Modellprüfeinrichtung 30 kann den nachgebildeten Netzwerkverbund 21 betreiben und hierdurch den entstehenden Netzwerk-Datenverkehr 27 erzeugen. Die Reaktion der Kommunikationsmodelle 22 auf Netzwerk-Datenverkehr 27 gibt die Reaktion der Steuergeräte 13 auf denselben Netzwerk-Datenverkehr 27 an. Durch die Modellprüfeinrichtung 30 kann nun auf der Grundlage eines Vergleichs oder eine Analyse des Netzwerk-Datenverkehrs 27 z.B. anhand zumindest eines Fehlermusters 31 erkannt werden, ob ein Fehlerzustand 32 in dem Netzwerkverbund 21 vorliegt. Falls ein Fehlerzustand 32 detektiert wird, kann ein Fehlerzustandssignal 33 von der Prüfvorrichtung 21 ausgegeben werden.

Das Fehlermuster 31 kann zum Beispiel den Unterschied des Netzwerk-Datenverkehrs 27 im Vergleich zu einem vorgesehenen Kommunikationsprotokoll 34 definieren oder ein vorbestimmtes Datenmuster beschreiben, von dem bekannt ist, dass es im Kraftfahrzeug 10 unerwünscht ist. Das Fehlermuster 31 kann also eine Abweichung von Kommunikationsprotokoll 34 oder eine kritische Datenkombination definieren.

Das Kommunikationsprotokoll 34 kann zum Beispiel als Datei aus einem Datenspeicher 35 durch die Prüfvorrichtung ermittelt oder bezogen werden. Das Kommunikationsprotokoll 34 kann z.B. eine Fibex-Spezifikation sein.

Zum Bilden der Kommunikationsmodelle 22 kann ebenfalls zum Beispiel eine Fibex-Spezifikation zugrunde gelegt werden. Damit kann die Erzeugung der Kommunikationsmodelle 22 automatisiert durch eine Wandlereinrichtung 42 durchgeführt werden, wie noch genauer erläutert wird.

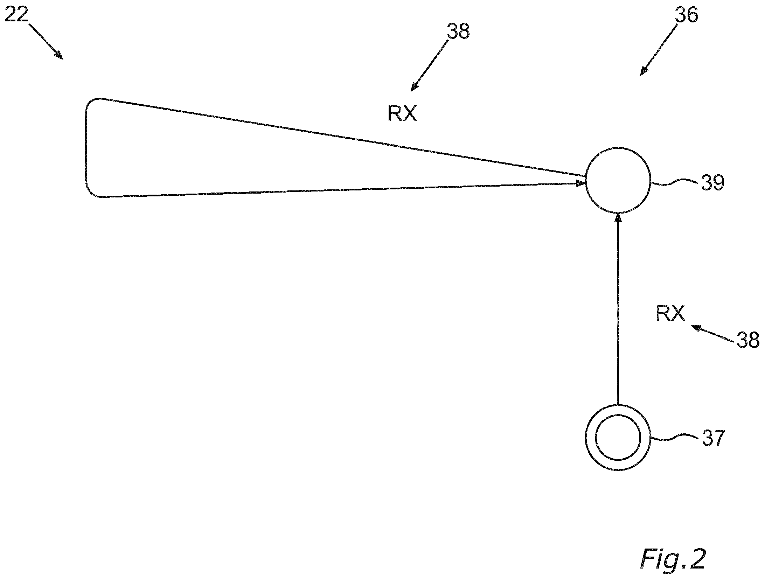

Fig. 2 zeigt ein mögliches Kommunikationsmodell, das als Zustandsautomat 36 ausgestaltet sein kann. Ausgehend von einem Initialzustand 37 kann zum Beispiel ein Empfangsverhalten 38 nachgebildet sein, bei welchem das Steuergerät ausgehend vom Initialzustand 37 eine erste Nachricht empfängt (RX) und von daraufhin seinen Zustand wechselt und in einem Wartezustand 39 weitere Nachrichten empfängt (RX).

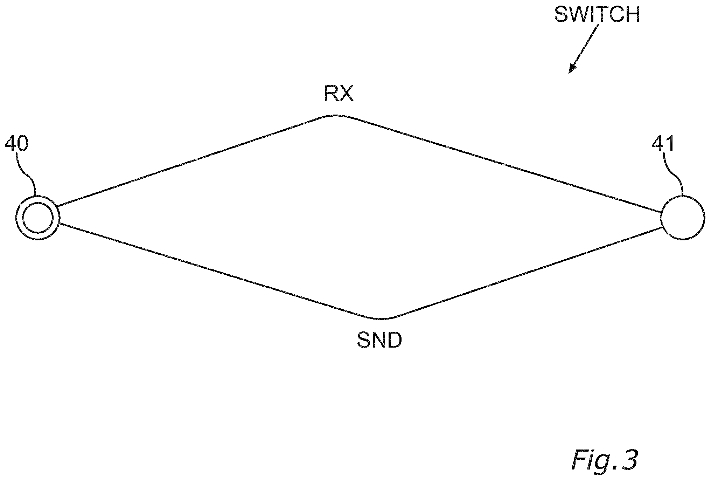

Fig. 3 zeigt, dass das Netzwerkmodell 24 zusätzlich zur Netzwerktopologie 25 auch ein Switch-Modell SWITCH für den Switch 16 aufweisen kann. Das Switch-Modell SWITCH kann wie der Switch 16 ausgehend von einem Initialzustand 40 über einen Netzwerk-Port oder Netzwerk-Anschluss eine Nachricht aus einem Netzwerkzweig 15 empfangen (RX) und hierdurch in einen Sendezustand 41 wechseln, von welchem aus es die empfangene Nachricht an einem vorbestimmten anderen Netzwerk-Port in einen anderen Netzwerkzweig 15 aussendet (SND).

Im Folgenden sind zusammenfassend die wichtigsten Aspekte der der Prüfvorrichtung 12 noch einmal dargestellt.

Der korrekte Kommunikationsablauf gemäß Kommunikationsprotokoll 34 (Protokollablauf), wie es während der Entwicklung spezifiziert worden sein kann, wird somit durch die Prüfvorrichtung 11 analysiert und auf Fehler untersucht. Hierzu wird jedes Kommunikationsmodell 22, 23 z.B. aus der Fibex-Spezifikation abgeleitet. Dieses Modell beschreibt den Nachrichtenaustausch und das Kommunikationsverhalten zwischen verschiedenen Steuergeräten oder ECUs (ECU - electronic control unit, Steuergerät) im Automotive-Bereich - z.B. ein Cluster, d.h. ein Netzwerkverbund. Hierzu wird aus jeder ECU der Kommunikationsspezifikation, ein Kommunikationsmodell 22, 23 erstellt, das den Nachrichtenaustausch der ECU simuliert. Das Modell der ECU ist ein Zustandsautomat 36 der z.B. das zyklische Senden und Empfangen von Nachrichten oder die Reaktion auf bestimmte Nachrichten simuliert.

Um eine vollständige Simulation eines Netzwerksegmentes durchzuführen, wird allerdings auch noch die entsprechende Netzwerktopologie 25 benötigt, z.B. ein CAN-Bus oder Ethernet-Switch 16. Daher wird die Netzwerktopologie 25 auch in einem entsprechenden Netzwerkmodell 24 nachgebildet. Z.B. kann ein Modell SWITCH für einen Ethernet-Switch erstellt werden. Dieses Modell SWITCH verhält sich wie ein realer Ethernet-Switch und leitet ankommende Nachrichten entsprechend weiter - getreu dem physikalischen Vorbild. Durch diesen Ethernet-Switch SWITCH kann dann das Netzwerksegment nachgebildet werden.

Es werden also alle ECU Modelle über das Ethernet-Switch-Modell SWITCH miteinander verbunden und eine Analyse der Kommunikation ist möglich.

Dieser Ansatz ist insbesondere für den Automotiv-Bereich vorteilhaft umsetzbar, da hier im Fahrzeugnetz eine feste Anzahl von ECUs vorhanden ist und die Kommunikation statisch im Vorfeld durch das Kommunikationsprotokoll 34 definiert ist. Ganz im Gegensatz zu herkömmlichen IT-System, in denen ein solches Verfahren nicht so gut anwendbar ist- aber dennoch möglich. Da hier häufige Änderungen von Applikationen und Updates der Fall sind und auch das Kommunikationsprotokoll oftmals nicht so sauber und im Detail spezifiziert wird.

Prinzipiell lässt sich festhalten, dass dieser Ansatz überall denkbar ist, einzige Voraussetzung es existiert im Vorfeld eine entsprechende Definition des Kommunikationsprotokolls. Der Ansatz ist z.B. auf Automotive-, Industrie-, Avionic-Systeme übertragbar. Da im Automotive-Bereich unterschiedliche Topologien (z.B. FlexRay, CAN, MOST, Ethernet...) zum Einsatz kommen, muss für jede Topologie ein eigenes Modell, das die Nachrichten entsprechend dem realen Vorbild weiterleitet, entworfen werden.

Die Erstellung der Kommunikationsmodelle 22 der einzelnen ECUs kann mittels einer Wandlereinrichtung 42 automatisiert erfolgen. Bevorzugt sind dies dann vereinfachte ECUs, die einfach nur zyklisch die Nachrichten senden oder nach Spezifikation auf Nachrichten antworten. Eine entsprechende Transformationsvorschrift 43 kann die Zustandsautomaten 36 z.B. auf der Grundlage von Makros und/oder eines Parsers aus den Spezifikationsdaten des Kommunikationsprotokolls 34 definieren. In der Spezifikation selbst ist keine Information über das interne Verhalten der ECU selbst hinterlegt. Wenn nötig kann aber natürlich nach der automatischen Generierung vom Entwickler ein "komplexeres" ECU-Modell erstellt werden, das dem realen Vorbild dann nahe kommt. Es hat dann auch im Idealfall ein "Verständnis" der Kommunikation reagiert also auch entsprechend auf den Inhalt der Nachrichten.

Dadurch existiert jetzt ein Modell der Kommunikation des Netzwerksegments mit entsprechender Topologie und allen an der Kommunikation beteiligten ECUs.

Um jetzt "Vulnerabilities" (Schwachstellen) in der Bearbeitung der Netzwerk-Nachrichten zu finden, werden Angreifer-Modelle 28 in die Kommunikation eingebracht. Diese Modelle sind z.B. Näherungen für reale Angreifer. Hier gibt es z.B. ein Modell für einen "Duplication Attacker", dieses Modell verdoppelt Nachrichten zufällig oder nach einen vorher definierten Schema. Hier sind natürlich auch noch eine Fülle von anderen Angreifern denkbar, auch Angreifer die wieder speziell für das zu untersuchende System entwickelt werden. Diese Angreifer haben dann also, ähnlich wie die komplexeren ECU-Modelle, auch "wissen" über das System und entsprechend komplexere Angriffe können durchgeführt werden. Es können hier dann regelrecht Angreifermodell-Datenbanken entstehen. Die dann auf neue Probleme angepasst werden können. Ein Angreifermodell kann ein fahrzeugfremdes Gerät beschreiben, also z.B. einen Computer, der an das Kraftfahrzeug zum Zwecke der Manipulation angeschlossen ist. Ein Angreifermodell kann auch ein modifiziertes Steuergerät des Kraftfahrzeugs beschreiben, also ein bereits infiziertes Steuergerät.

Es hat auch den Vorteil, dass die Analyse automatisch durchgeführt wird. Dadurch können auch Änderungen und deren Auswirkung, an der Kommunikationsspezifikation, einfach und automatisiert getestet werden. So können auch Fehler schon frühzeitig während der Entwicklung erkannt und darauf reagiert werden. Jedes der beschriebenen Modelle hat zudem auch Schnittstellen für Angreifermodelle 28, um hier eine Interaktion zu Gewährleisten. Diese Schnittstellen werden automatisch bei der Generierung der ECUs erstellt bzw. sind bei dem Netzwerkmodell beinhaltet.

Angreifermodelle sind ebenso Zustandsautomaten die allerdings nicht von der Fibex-Spezifikation abgeleitet werden können. Diese Angreifermodelle müssen händisch vom Entwickler erstellt werden. Hier kann dann auch eine Angreifer-Bibliothek erstellt werden die dann auch entsprechend weiterverwendet werden kann. Diese Angreifermodelle sind dann im optimalen Fall auch nicht auf das zu analysierende Problem gebunden, sondern können wiederverwendet werden (Spezielle Angreifer für das konkrete Problem sind dennoch möglich und auch nicht zu vermeiden).

Die Prüfvorrichtung führt die automatische Transformierung des Kommunikationsprotokolls, in dem die Kommunikation der einzelnen ECUs beschrieben ist, durch in ein Gesamtmodell 21 in dem die einzelnen ECUs als Zustandsautomaten abgebildet sind. Die ECUs im Gesamtmodell werden dann automatisch durch eine generische Netzwerktopologie-Komponente (z.B. Ethernet Switch, ...) verbunden. Die verwendete Topologie 25 ist natürlich von der Spezifikation abhängig, es findet keine Konvertierung statt. Durch verschiedene Angreifermodelle werden dann Schwachstellen identifiziert. Dies geschieht mit Hilfe eines Modellcheckers 30 (z.B. UPPAAL, wobei auch andere verwendet werden können) . Dadurch können so schon Probleme im Kommunikationsprotokoll im Vorfeld erkannt und behoben werden. Daraus folgt dann ein sichereres Gesamtsystem 21.

Das Modell einer ECU ist beispielhaft in Fig. 2 dargestellt. Die ECU erwartet nur eine Nachricht (RX). Diese ECU ist eine vereinfachte ECU, also ohne Fähigkeit der weiteren Verarbeitung der eingehenden Nachricht. Es wird nur auf die Nachricht mit einem Zustandswechsel reagiert und dann keine Verarbeitung durchgeführt. In der Spezifikation wurden auch keine weiteren Einschränkungen gegeben, z.B. dass eine Nachricht zyklisch gesendet wird. Daher kann die Nachricht zu jedem Zeitpunkt empfangen werden.

Insgesamt zeigt das Beispiel, wie durch die Erfindung eine modellbasierte Anomalie-Erkennung über das Protokollverhalten von Netzwerkteilnehmern in einem Kraftfahrzeug bereitgestellt werden kann.

### Bezugszeichenliste

- 10: Kraftfahrzeug
- 11: Prüfvorrichtung
- 12: Netzwerkverbund
- 13: Steuergeräte
- 14: Datennetzwerk
- 15: Netzwerkzweig
- 16: Ethernet-Switch
- 17: Kommunikationseinrichtung
- 18: Funkverbindung
- 19: Datenquelle
- 20: Prozessoreinrichtung
- 21: Netzwerkverbund
- 22: Kommunikationsmodell
- 23: Kommunikationsmodell
- 24: Netzwerkmodell
- 25: Netzwerktopologie
- 26: Übertragungspfad
- 27: Netzwerk-Datenverkehr
- 28: Angreifermodell
- 29: Störquellenmodell
- 30: Modellprüfeinrichtung
- 31: Fehlermuster
- 32: Fehlerzustand
- 33: Fehlerzustandssignal
- 34: Kommunikationsprotokoll
- 35: Datenspeicher
- 36: Zustandsautomat
- 37: Initialzustand
- 38: Empfangsverhalten
- 39: Wartezustand
- 40: Initialzustand
- 41: Sendezustand
- 42: Wandlereinrichtung
- 43: Transformationsvorschrift

## Patentansprüche

1. Verfahren zum Überprüfen eines Verhaltens eines Netzwerkverbundes (12) aus Steuergeräten (13) eines Kraftfahrzeugs (10) bei fehlerhaftem und/oder manipuliertem Netzwerk-Datenverkehr (27), wobei
- das für den Betrieb des Kraftfahrzeugs (10) bestimmungsgemäße Sendeverhalten und/oder Empfangsverhalten (38) einiger oder aller der Steuergeräte (38) jeweils ein Kommunikationsmodell (22) des Steuergeräts (13) festgelegt wird,
- durch ein Netzwerkmodell (24) einer Netzwerktopologie (25) eines Datennetzwerks (14) des Kraftfahrzeugs (10) festgelegt wird,
- der Netzwerkverbund (12) durch Anschließen der Kommunikationsmodelle (22) an das Netzwerkmodell (24) gebildet wird,
- durch eine Modellprüfeinrichtung (30) die Kommunikationsmodelle (22) betrieben werden und der hierdurch gemäß dem Sendeverhalten der Steuergeräte (22) generierte Netzwerk-Datenverkehr (27) über das Netzwerkmodell (24) gemäß der Netzwerktopologie (25) zwischen den Kommunikationsmodellen (22) übertragen und gemäß dem Empfangsverhalten (38) der Steuergeräte (22) empfangen wird,
**dadurch gekennzeichnet, dass**
- zumindest ein Störquellenmodell (29), welches ein vorbestimmtes, dem bestimmungsgemäßen Betrieb des Kraftfahrzeugs (10) widersprechendes Sendeverhalten aufweist, an das Netzwerkmodell (24) angeschlossen und durch die Modellprüfeinrichtung (30) betrieben wird,
- durch die Modellprüfeinrichtung (30) erkannt wird, ob zumindest eines der Kommunikationsmodelle (22) und/oder das Netzwerkmodell (24) einen vorbestimmten Fehlerzustand (32) einnimmt.

2. Verfahren nach Anspruch 1, wobei zumindest ein Störquellenmodell (29) ein in seinem Sendeverhalten manipuliertes oder defektes Steuergerät (23) und/oder zumindest ein Störquellenmodell (29) eine zusätzliche, zusätzlichen Netzwerk-Datenverkehr (27) in das Datennetzwerk (14) einspeisende Datenquelle (28) nachbildet.

3. Verfahren nach einem der vorhergehenden Ansprüche, wobei durch ein Störquellenmodell (29) als Sendeverhalten eine Vervielfachung von zwischen zumindest zwei Steuergeräten (22) ausgetauschten Nachrichten durchgeführt wird.

4. Verfahren nach einem der vorhergehenden Ansprüche, wobei durch ein Störquellenmodell (29) als Sendeverhalten Nachrichten mit einer Senderate ausgesendet werden, die größer als ein einstellbarer Schwellenwert ist.

5. Verfahren nach einem der vorhergehenden Ansprüche, wobei das Netzwerkmodell (24) zumindest eine Anschlussschnittstelle nachbildet, welche zum Anschließen eines Zusatzgeräts an dem Datennetzwerk (14) ausgestaltet ist.

6. Verfahren nach einem der vorhergehenden Ansprüche, wobei die Kommunikationsmodelle (22) und/oder das zumindest eine Störquellenmodell (29) jeweils als Zustandsautomat (36) ausgestaltet ist.

7. Verfahren nach Anspruch 6, wobei mittels des jeweiligen Zustandsautomaten (36) als Sendeverhalten eine zyklische Erzeugung von Netzwerk-Datenverkehr (27) gesteuert wird.

8. Verfahren nach einem der vorhergehenden Ansprüche, wobei Modellprüfeinrichtung (30) die Kommunikationsmodelle (22) und das zumindest eine Störquellenmodell (29) mittels eines Model-Checkers, insbesondere einer LTL-Überprüfung, betreibt.

9. Verfahren nach einem der vorhergehenden Ansprüche, wobei das bestimmungsgemäße Sendeverhalten und/oder Empfangsverhalten (38) durch ein Kommunikationsprotokoll (34) des Kraftfahrzeugs (10) festgelegt wird.

10. Verfahren nach Anspruch 9, wobei der Fehlerzustand (32) umfasst, dass der Netzwerk-Datenverkehr (27) dem Kommunikationsprotokoll (34) widerspricht.

11. Verfahren nach Anspruch 9 oder 10, wobei durch eine Wandlereinrichtung (42) aus dem Kommunikationsprotokoll (34) die Kommunikationsmodelle (22) der Steuergeräte (13) auf der Grundlage einer vorbestimmten Transformationsvorschrift (43) erzeugt werden.

12. Verfahren nach einem der vorhergehenden Ansprüche, wobei das Netzwerkmodell (24) einen Switch (16) nachbildet.

13. Prüfvorrichtung (11) zum Detektieren eines durch fehlerhaften und/oder manipulierten Netzwerk-Datenverkehr (27) in einem Netzwerkverbund (12) aus Steuergeräten (13) eines Kraftfahrzeugs (10) herbeiführbaren Fehlerzustandes (32), **dadurch gekennzeichnet, dass** die Prüfvorrichtung (11) eine Prozessoreinrichtung (20) aufweist, die dazu eingerichtet ist, ein Verfahren nach einem der vorhergehenden Ansprüche durchzuführen.

## Claims

1. Method for checking a behaviour of a network assembly (12) comprising control units (13) of a motor vehicle (10) in the event of erroneous and/or manipulated network data traffic (27), wherein
- the transmission behaviour and/or reception behaviour (38) of some or all of the control units (38) as intended for the operation of the motor vehicle (10) is defined by a respective communication model (22) of the control unit (13),
- a network model (24) defines a network topology (25) of a data network (14) of the motor vehicle (10),
- the network assembly (12) is formed by connecting the communication models (22) to the network model (24),
- a model checking device (30) operates the communication models (22), and the network data traffic (27) generated thereby according to the transmission behaviour of the control units (22) is transmitted between the communication models (22) via the network model (24) according to the network topology (25) and received according to the reception behaviour (38) of the control units (22),
**characterized in that**
- at least one interference source model (29), which has a predetermined transmission behaviour that is inconsistent with the operation of the motor vehicle (10) as intended, is connected to the network model (24) and operated by the model checking device (30),
- the model checking device (30) detects whether at least one of the communication models (22) and/or the network model (24) adopts a predetermined error state (32).

2. Method according to Claim 1, wherein at least one interference source model (29) models a control unit (23) whose transmission behaviour has been manipulated or that is faulty and/or at least one interference source model (29) models an additional data source (28) feeding additional network data traffic (27) to the data network (14).

3. Method according to either of the preceding claims, wherein an interference source model (29) performs a multiplication of messages exchanged between at least two control units (22) as transmission behaviour.

4. Method according to one of the preceding claims, wherein an interference source model (29) transmits messages at a transmission rate that is higher than an adjustable threshold value as transmission behaviour.

5. Method according to one of the preceding claims, wherein the network model (24) models at least one access interface configured to connect an additional device to the data network (14) .

6. Method according to one of the preceding claims, wherein the communication models (22) and/or the at least one interference source model (29) are each configured as a state machine (36).

7. Method according to Claim 6, wherein the respective state machine (36) is used to control a cyclic generation of network data traffic (27) as transmission behaviour.

8. Method according to one of the preceding claims, wherein the model checking device (30) operates the communication models (22) and the at least one interference source model (29) by means of a model checker, in particular an LTL check.

9. Method according to one of the preceding claims, wherein the transmission behaviour and/or reception behaviour (38) as intended is defined by a communication protocol (34) of the motor vehicle (10).

10. Method according to Claim 9, wherein the error state (32) comprises the network data traffic (27) being inconsistent with the communication protocol (34).

11. Method according to Claim 9 or 10, wherein a converter device (42) generates the communication models (22) of the control units (13) from the communication protocol (34) on the basis of a predetermined transformation rule (43).

12. Method according to one of the preceding claims, wherein the network model (24) models a switch (16).

13. Checking apparatus (11) for detecting an error state (32) that is able to be brought about by erroneous and/or manipulated network data traffic (27) in a network assembly (12) comprising control units (13) of a motor vehicle (10), **characterized in that** the checking apparatus (11) has a processor device (20) designed to perform a method according to one of the preceding claims.

## Revendications

1. Procédé de contrôle d'un comportement d'un groupe de réseaux (12) constitué d'appareils de commande (13) d'un véhicule à moteur (10) en cas de trafic de données de réseau (27) erroné et/ou manipulé, dans lequel
- le comportement de transmission et/ou le comportement de réception (38) de certains ou de la totalité des appareils de commande (38), normalement prévu pour le fonctionnement du véhicule à moteur (10), est défini par un modèle de communication (22) respectif de l'appareil de commande (13),
- une topologie de réseau (25) d'un réseau de données (14) du véhicule à moteur (10) est définie par un modèle de réseau (24),
- le groupe de réseaux (12) est formé par association des modèles de communication (22) avec le modèle de réseau (24),
- les modèles de communication (22) sont exploités par un dispositif de contrôle des modèles (30) et le trafic de données de réseau (27) ainsi généré conformément au comportement de transmission des appareils de commande (22) est transmis entre les modèles de communication (22) par l'intermédiaire du modèle de réseau (24) conformément à la topologie de réseau (25) et est reçu conformément au comportement de réception (38) des appareils de commande (22),
**caractérisé en ce que**
- au moins un modèle de source de perturbations (29), qui présente un comportement de transmission prédéterminé non conforme à l'utilisation normalement prévue du véhicule à moteur (10), est associé au modèle de réseau (24) et est exploité par le dispositif de contrôle des modèles (30),
- il est détecté par le dispositif de contrôle des modèles (30) si au moins l'un des modèles de communication (22) et/ou le modèle de réseau (24) passe dans un état d'erreur (32) prédéterminé.

2. Procédé selon la revendication 1, dans lequel au moins un modèle de source de perturbations (29) reproduit un appareil de commande (23) manipulé ou défectueux dans son comportement de transmission et/ou au moins un modèle de source de perturbations (29) reproduit un trafic de données de réseau (27) supplémentaire injectant une source de données (28) dans le réseau de données (14) .

3. Procédé selon l'une des revendications précédentes, dans lequel, en tant que comportement de transmission, une multiplication de messages échangés entre au moins deux appareils de commande (22) est effectuée par un modèle de source de perturbations (29).

4. Procédé selon l'une des revendications précédentes, dans lequel, en tant que comportement de transmission, des messages sont émis par un modèle de source de perturbations (29) à un débit de transmission qui est supérieur à une valeur de seuil réglable.

5. Procédé selon l'une des revendications précédentes, dans lequel le modèle de réseau (24) reproduit au moins une interface de connexion qui est conçue pour connecter un appareil supplémentaire au réseau de données (14).

6. Procédé selon l'une des revendications précédentes, dans lequel les modèles de communication (22) et/ou ledit au moins un modèle de source de perturbations (29) sont respectivement conçus sous la forme d'un automate fini (36).

7. Procédé selon la revendication 6, dans lequel, en tant que comportement de transmission, une génération cyclique du trafic de données de réseau (27) est commandée au moyen de l'automate fini (36) respectif.

8. Procédé selon l'une des revendications précédentes, dans lequel le dispositif de contrôle des modèles (30) exploite les modèles de communication (22) et ledit au moins un modèle de source de perturbations (29) au moyen d'un contrôleur de modèles, en particulier d'un contrôle LTL.

9. Procédé selon l'une des revendications précédentes, dans lequel le comportement de transmission et/ou le comportement de réception (38) normalement prévu est défini par un protocole de communication (34) du véhicule à moteur (10).

10. Procédé selon la revendication 9, dans lequel l'état d'erreur (32) comprend le fait que le trafic de données de réseau (27) n'est pas conforme au protocole de communication (34).

11. Procédé selon la revendication 9 ou 10, dans lequel les modèles de communication (22) des appareils de commande (13) sont générés à partir du protocole de communication (34) par un dispositif de conversion (42) sur la base d'une règle de transformation (43) prédéterminée.

12. Procédé selon l'une des revendications précédentes, dans lequel le modèle de réseau (24) reproduit un commutateur (16).

13. Dispositif de contrôle (11) destiné à détecter un état d'erreur (32) qui peut être provoqué par un trafic de données de réseau (27) erroné et/ou manipulé dans un groupe de réseaux (12) constitué d'appareils de commande (13) d'un véhicule à moteur (10),
**caractérisé en ce que** le dispositif de contrôle (11) comporte un dispositif à processeur (20) qui est conçu pour mettre en œuvre un procédé selon l'une des revendications précédentes.
